# EUROPEAN PATENT SPECIFICATION

(11) **EP 0 618 261 B1**
(45) Date of publication and mention of the grant of the patent: **03.06.1998**
(21) Application number: 94200885.5
(22) Date of filing: 30.03.1994
(51) Int. Cl.: C08L 53/02, B29D 29/06

(54) **Conveyor belts derived from hot melt compositions, based on hydrogenated block copolymers derived from a vinyl aromatic and a conjugated diene**
Förderbänder abgeleited von Heiss-Schmelz-Zusammensetzungen auf Basis von hydrierten Blockcopolymeren aus einem vinylaromatischen Monomer und einem konjugierten Dien
Bandes transporteuses dérivés de compositions thermofusibles à base de copolymères blocs hydrogénés dérivés d'un monomère vinyl aromatique et d'un diène conjugué

(30) Priority: 02.04.1993 EP 93200948
(43) Date of publication of application: 05.10.1994
(73) Proprietor: SHELL INTERNATIONALE RESEARCH MAATSCHAPPIJ B.V., 2596 HR Den Haag (NL)
(72) Inventor: Graafland, Teunis, B-1348 Ottignies, Louvain-la-neuve (BE); Breuer, Olaf Kurt, B-1348 Ottignies, Louvain-la-neuve (BE)

(56) References cited:
- EP-A- 0 524 765
- EP-A- 0 541 174
- FR-A- 2 333 019
- US-H- H1 022

## Description

The invention is relating to conveyor belts, the top layer of which has been derived from hot melt compositions, based on hydrogenated block copolymers from a vinyl aromatic and a conjugated diene and more in particular styrene and butadiene and/or isoprene respectively, to hot melt compositions to be used and process for the manufacture of said conveyeor belts.

Conveyor belts for a variety of applications are at present almost exclusively manufactured of plasticized polyvinylchloride (PVC) or polyurethanes (TPU) in combination with one or more polyester (PET) or polyamide (PA) fabrics as support. Said belts are primarily used in the food industry and the business/services area.

The manufacture of said belts has up to now been carried out as a straightforward process in which PVC is applied to the base fabric as a plastisol, whereas polyurethanes are applied as powders.

In both cases fusion is achieved at about 200 °C during a short period in an oven, in general less than 1 minute, resulting in a bonding of the produced polymer sheet to the fabric of more than 2 N/mm and preferably of more than 3 N/mm as determined by a T-peel test.

However for reasons of required recyclability of these belts, high dirt pick-up of certain types and restricted use at low temperatures down to -40 °C, there has grown a strong need for alternative materials.

Therefore the primary object of the present invention is to provide such alternative conveyor belts, which have to be completely recyclable without any significant charge to environment due to production of toxic byproducts.

More in particular, the primary object of the invention is to provide such alternative conveyor belts, which are coated on only one side of the fabric with an adequately bonded (i.e. > 2 N/mm) polymer layer, other than the presently used objected ones, and which, moreover, show a lateral stability i.e. a stability perpendicular to the direction of transportation of goods.

It will be appreciated that this aim could not be reached by using e.g. EPDM or TPU containing compositions when using the conventional application methods, such as extrusion/coating, or reversed roll-coating.

Moreover, it was generally known that for conventional conveyor belts to be produced from a latex of SBR (random vinyl aromatic/conjugated diene rubber) and fabric, the fabric threads had preferably been precoated with e.g. a resorcine-formaldehyde latex, in order to obtain sufficient adhesion.

Moreover, it will be appreciated that such SBR or EPDM comprising conveyor belts have to be vulcanized by heat treatment in its final form.

As a result of extensive research and experimentation it has now been surprisingly found that such conveyor belts aimed at, and which form one of the aspects of the present invention, are obtainable by means of the application of a hot melt composition, comprising at least:
(a) a block copolymer, containing at least two terminal poly(vinyl aromatic) blocks and at least one internal poly(conjugated diene) block, in which at least 80% of the original ethylenical unsaturation of the poly(conjugated diene) block has been selectively hydrogenated, said block copolymer optionally being modified by grafting polar moieties on it,
(b) a non-aromatic plasticizing oil,
(c) a terminal block compatible resin;
on a fabric having from 5 to 25 threads per cm in both directions, preferably 10 to 20 threads per cm and more preferably 15 to 18 threads per cm, i.e. (15-18)*(15-18) threads/cm² of fabric, while the threads in said fabric have a thickness in the range of from 20 µ to 300 µ and preferably from 100 µ to 300 µ.

The coating density of the hot melt composition in the conveyor belts of the present invention is in the range from 0.5 to 3 g/cm² and preferably in the range of from 1 to 2 g/cm².

The block copolymers which have been found to be suitably applied, preferably are linear triblock copolymers or multi-armed (more than 2 arms) radial or star shaped block copolymers, the blocks of which have been predominantly derived from styrene and butadiene or isoprene respectively. With the term "predominantly derived from" is meant that the main monomer of the respective individual blocks optionally may be mixed with minor amounts of another comonomer and more in particular with minor amounts of the main monomer of the other blocks.

Examples of the vinyl aromatic monomers may be selected from styrene, ∝-methylstyrene, p-methylstyrene, m-methylstyrene, o-methylstyrene, p-tert-butylstyrene, dimethylstyrene and vinylnaphthalene and mixtures thereof and conjugated diene monomers may be selected from butadiene, isoprene and piperylene and mixtures thereof.

Of these monomers styrene and butadiene or isoprene or mixtures thereof are preferred. Most preferred block copolymers are those which only contain substantially pure poly(styrene) blocks and substantially pure poly(butadiene) or poly(isoprene) blocks.

Examples of such block copolymers which can be suitably used are KRATON G block copolymers (KRATON is a trade mark) and more preferably KRATON G 1652 block copolymer is used.

The selectively hydrogenated block copolymers to be used as component (a) of the hot melt composition may optionally be modified by grafting to them a polar entity, such as carboxylic acids or derivatives thereof, epoxy compounds, silane compounds, amines or amides. Representative examples of block copolymers grafted with unsaturated acid derivatives are known from e.g. US patent No. 4,007,311, US patent No. 4,264,747, European patent applications 0085115, 0173380, 0215501, 0301665.

Preferably the grafting of polar entities will be performed on the selectively hydrogenated poly(conjugated diene) blocks. More preferably unsaturated carboxylic acids or esters or anhydrides thereof will be grafted to said poly(conjugated diene) blocks.

Preferred examples of such grafting agents are maleic acid or anhydride thereof, fumaric acid or esters thereof, itaconic acid or esters or anhydride thereof, acrylic acid or methacrylic acid or esters of said acids and preferably glycidylacrylate. More preferably maleic anhydride or acrylic acid esters are used. Examples of commercial block copolymers grafted with maleic anhydride, are KRATON FG 1901 and FG 1921 X.

It will be appreciated that also mixtures of unmodified hydrogenated block copolymers and of modified (preferably structurally related) hydrogenated block copolymers can be used as component (a).

Application of such mixtures of functionalized and non functionalized block copolymers have been found to provide an additionally improved bonding e.g. at least 4 N/mm.

In such mixtures the weight ratios of the unmodified and modified block copolymers components can vary in the range of from 95/5 to 40/60 and preferably in the range of from 80/20 to 50/50.

The terminal blocks in the selectively hydrogenated block copolymers have usually molecular weights, ranging from 3,000 to 100,000 and preferably from 5,000 to 20,000, and the internal selectively hydrogenated poly(conjugated diene) blocks usually have apparent molecular weights in the range of from 10,000 to 300,000 and preferably from 30,000 to 100,000. The precursor poly-(conjugated diene) blocks usually contain from 5 to 50 mol%, relative to the conjugated diene molecules, of vinyl groups originating from 1,2 polymerization.

The complete block copolymer to be used according to the present invention, is normally containing bound vinyl aromatic in an amount of from 20 to 60% by weight and preferably from 25 to 40% by weight. The apparent molecular weight of the total block copolymer will normally be in the range of from 20,000 to 350,000 and preferably in the range of from 40,000 to 200,000.

As component (b) various plasticizing oils are useful in the compositions to be used according to the present invention.

Plasticizing oils which have been found useful include petroleum derived oils, olefin oligomers and low molecular weight polymers, as well as vegetable and animal oil and their derivatives.

The petroleum derived oils which may be employed are relatively high boiling materials, containing only a minor proportion of aromatic hydrocarbons preferably less than 20 percent and more preferably less than 15 percent by weight of the oil most preferably the oil may be totally non-aromatic. The oligomers may be polypropylene, polybutenes, hydrogenated polyisoprene, hydrogenated polybutadiene, polypiperylene and copolymers of piperylene and isoprene, having average molecular weights between 350 and 10,000.

Vegetable and animal oils include glyceryl esters of the usual fatty acids and polymerization products thereof.

Example of a preferred paraffinic oil are Primol 352 (Primol is a trade mark) and the Napvis and Hyvis (trade marks) polyolefins, having a molecular weight in the range of from 500 to 6,000. Preferably amounts of from 100 to 200 parts by weight per 100 parts by weight of block copolymer are applied and preferably from 120 to 170 parts by weight per 100 parts by weight of block copolymer.

As component (c) various terminal block compatible resins are useful in the compositions used according to the present invention.

Examples of the terminal poly(vinyl aromatic) block modifying resins include coumarone-indene resin, polyphenylene ethers and more particularly poly(2,6-dimethyl-1,4-phenylene ether), polystyrene resin, vinyltoluene-alphamethylstyrene copolymer resin, polyindene resin, or poly(methyl indene) resin.

Examples of such commercial resins are HERCURES HM 100, ENDEX 160, KRISTALEX F 120, KRISTALEX F 5140, NEVCHEM NL 140 and PICCOTEX 120. (HERCURES, ENDEX, KRISTALEX, NEVCHEM and PICCOTEX are trade marks).

Preferably amounts of from 50 to 150 parts by weight of said terminal block modifying resin per 100 parts by weight of block copolymer are applied, and more preferably from 75 to 125 parts by weight.

Preferred modifying resins are optionally substituted polystyrene resins and/or polyphenylene ethers. More preferably substituted polystyrene and/or poly (2,6-dimethyl-1,4-phenylene ether) are used.

The starting fabric may be based on a variety of synthetic or natural yarns, such as polyester (PET or PBT), polyamides, poly(ethylene), aramide, cotton, flax, of which polyester fabrics are preferred.

More preferably PET fabrics are used, which have long straight, relatively thick threads or filaments (e.g. 300 µ) in the main direction and thinner corrugated threads or filaments in the longitudinal direction (e.g. 100 µ). The fabric threads or filaments may have been pretreated with resorcinformaldehyde latex. Said fabrics have been found to provide an increased bonding to the vinyl aromatic/conjugated diene block polymer hot melt composition.

Moreover, it has been found that PET fabrics with cut filaments, giving a rough surface to the fabric, give the strongest bonding as compared with those of PET fabric with long (uncut) filaments.

It will be appreciated that the hot melt composition may optionally contain, in addition to the three before-mentioned main components one or more auxiliary agents such as stabilizers, fillers, colouring agents, slip agents, and additional thermoplastic polymers, such as polyethylene and preferably LLDPE, polypropylene, ethylene vinyl acetate copolymers and the like.

The stabilizers or antioxidants optionally used in accordance with the practice of the present invention include high molecular weight hindered phenols and multifunctional phenols such as sulphur and/or phosphorus containing phenols. Hindered phenols are well known to those skilled in the art and may be characterized as phenolic compounds, "which also contain sterically bulky radicals in close proximity to the phenolic hydroxyl group thereof". In particular tertiary butyl groups or amyl groups generally are substituted onto the benzene ring in at least one of the ortho positions relative to the phenolic hydroxy group.

Representatives of such stabilizers are commercially available under the trade marks SUMILIZER and IRGANOX, e.g. SUMILIZER GM and GS, IRGANOX 1010.

As additional auxiliaries, inorganic and organic fillers can be used, which are well known in the art. Examples of such fillers include calcium carbonate, aluminium silicate, clay, tale titanium dioxide, bentonites, kaolin, barytes, mica, silica, barium sulfate or mixtures thereof. A preferred example of an inorganic filler is marketed under the trademark MILLICARB.

As an additional polymer component preferably LLDPE can be included in the hot melt composition in amounts up to 80 parts by weight per 100 parts by weight of block copolymer, and preferably in amounts of from 50 to 70 parts by weight in order to reach further improved abrasion resistance.

It has been surprisingly found that when applying a hot melt on a fabric according to the present invention by one step processing techniques, such as extrusion-coating, conveyor belts could be obtained, showing a very good bonding of the polymer composition to the fabric and in particular to the polyester fabric of 4 N/mm or more, due to the low melt viscosity (high melt flow) of these hot melt compositions, enabling a better penetration of the fabric, giving rise to excellent 180°T-peel strength.

On the other hand the conveyor belts, obtainable according to the present invention appeared to show an attractive flexibility.

It will be appreciated that another aspect of the present invention is formed by the process for manufacturing conveyor belts, comprising the application of the hot melt composition as specified hereinbefore on the fabric to form a one side coating layer having a thickness in the range of from 0.5 to 5 mm and preferably from 1 to 3 mm.

It will be appreciated that the top of the solidified hot melt composition layer of the conveyor belt can be additionally coated with a layer, providing an improved abrasion resistance e.g. sprayable epoxy or polyurethane systems.

This application of the hot melt may take place by means of usual application techniques and more in particular by an extrusion-coating step, using a three roll take off to compress sheet and fabric.

Another aspect of the present invention is formed by specifically selected hot melt compositions, comprising hot melt composition comprising:
(a) a mixture of a modified block copolymer, containing at least two terminal poly(vinylaromatic) blocks and at least one internal poly(conjugated diene) block, in which at least 80% of the original ethylenical unsaturation of the poly(conjugated diene) block has been selectively hydrogenated which has been modified by grafting to them a polar entity, such as carboxylic acids or derivatives thereof, epoxy compounds, silane compounds, amines or amides, and
   an unmodified block copolymer, containing at least two terminal poly(vinylaromatic) blocks and at least one internal poly(conjugated diene) block, in which at least 80% of the original ethylenical unsaturation of the poly(conjugated diene) block has been selectively hydrogenated, in which mixture the weight ratio of unmodified to modified block copolymer can vary in the range of from 95/5 to 40/60.
(b) a non-aromatic plasticising oil in an amount of from 100 to 200 parts by weight per 100 parts by weight of block copolymer and
(c) a poly(vinylaromatic) compatible resin in an amount of from 50 to 150 parts by weight per 100 parts by weight of block copolymer.

Said hot melt compositions have been found to be applied preferably for the manufacture of conveyor belts as specified hereinbefore.

From European patent application no. 541,174A1 were known block copolymer compositions, comprising
(a) a block copolymer containing at least one block, derived from predominantly vinyl aromatic compound and at least one selectively hydrogenated elastomeric block, derived from predominantly conjugated diene,
(b) thermoplastic polymers selected from polyalkylenes, poly(vinyl aromatic), polyphenylene ether and mixtures thereof in an amount of from 5 parts by weight to 500 parts by weight per 100 parts by weight of block copolymer.
(c) a plastifier consisting of a poly(alkylene) having a M_{w}/Mₙ ratio in the range of from 1.0 to 3.0, preferably of from 1.3 to 2.4, and having a number average molecular weight in the range of from 1100 to 6000 and preferably in the range of from 1200 to 4500 and more preferably from 2000 to 3500 in an amount of from 5 to 200 parts by weight per 100 parts by weight of block copolymer,
(d) fillers in an amount of from 0 to 500 parts by weight preferably 50 to 250 per 100 parts by weight of block copolymer, and
(e) additives such as flame retarders, antioxidantia, stabilizers, flow promoting resins, dyes and the like, each of the additives in an amount of from 0 to 50 parts by weight per 100 parts by weight of block copolymer.
The block copolymer composition shows properties, which are in particular not influenced by heat ageing, and is therefore very useful for the more sophisticated applications, e.g. in the medical area.

From the French patent application no. 2333019 block copolymer compositions were known to be used for the manufacture of improved footwear, and comprising:
(a) 100 parts by weight of a mixture of block copolymers, which have been partially hydrogenated, comprising
   (a,1) 50 to 90 parts by weight of a block copolymer a, having at least two blocks of polymer A₁ derived from a monoalkenyl aromatic monomer and at least one block partially or completely hydrogenated A2 derived from a aliphatic conjugated diene, wherein the blocks A1 represented from 25 to 35% of the total A block copolymer weight and wherein the polymer blocks A1 had a weight average molecular weight between 7,500 and 15,000, and
   (a,2) 10 to 50 parts by weight of a block copolymer B, having at least two polymer blocks B1 derived from monoalkenyl aromatic monomer and at least one block partially or completely hydrogenated B₂, derived from aliphatic conjugated diene, wherein the blocks B1 represented from 25 to 35% of the weight of the total B block copolymer and wherein the blocks B1 had weight average molecular weights of from 20,000 to 37,000,
(b) 50 to 150 parts by weight of hydrocarbon oil,
(c) 25 to 90 parts by weight of a polymer derived from alfa olefin, having a melt viscosity of from 5 to 25 dg/min,
(d) 0-35 parts by weight of a resin and
(e) 0 to 150 parts by weight of a fine filler.
The poly(conjugated diene) blocks could be hydrogenated to a degree of at least 95%.

The block copolymers A and/or B could in addition include blocks of polar monomer, which preferably may be grafted to the core block copolymers.

From US patent No. 4,623,574 ballistic resistant composite articles were known, which articles comprised a network of high strength fibres which individually were coated with an elastomeric matrix material.

From British patent application No. 2181670 were known tubular lining materials for pipelines, having warps and wefts of threads of intertwisted filament yarns and speen yarns of synthetic fibres and a coating of a blend of polyethylene and styrene-ethylene-butylene, penetrating into the interstices of the fabric structure.

However, no technical teaching leading to the conveyor belts of the present invention, can be derived from these publications.

The invention will be further illustrated by the following examples, however, without restricting its scope to these embodiments.

### EXAMPLE 1

Hot melt composition 1, (see Table) containing 100 parts by weight of KRATON G-1652 block copolymer and having a melt viscosity of 26.Pa.s at 180 °C was applied to a PET fabric, containing 18∗18 threads/cm² and each having an average thickness of about 100 µ by means of an extrusion coating process. The experiments were carried out on a Brabender single screw extruder, L/D = 30 provided with a slit-die of 10 cm width and a die gap of about 1 mm. The hot extruded sheet (melt temperature in the die 155 °C) was immediately applied on the fabric and wound up via a three roll "take off" unit.

In this unit the lower and upper roll were movable and connected via springs to the fixed middle roll, therewith providing some compression of the sheet and the fabric.

The distance between the rolls was set to about 1.5 mm. The temperature of the first two rolls was 80 °C, while the third roll had a temperature of about 15 °C. By means of this equipment a sheet of about 1 mm was applied to the fabric in a continuous way.

The threads of the PET fabric were made up of short(cut) filaments to improve the bonding. The bonding force between the composition and the PET fabric was determined by means of a T-peel test according to ASTM D 1876. For all samples measured cohesive failure was found which means that the bonding force is at least 2.5 N/mm.

### EXAMPLES 2-6

Hot melt compositions 2-6 as listed in Table 1 were prepared with varying amounts of block copolymers constituents. They were applied in the same way as described in Example 1 to the same PET fabric.

The bonding between all compositions and the fabric was determined in the same way and was found to be at least 2.5 N/mm.

**Table 1**

| Formulations and properties of block copolymer hot melts | | | | | | |
|---|---|---|---|---|---|---|
| Composition | 1 | 2 | 3 | 4 | 5 | 6 |
| KRATON G-1652 | 100 | 60 | 60 | 80 | 40 | - |
| KRATON FG-1901 | | 40 | 40 | 20 | 60 | 100 |
| PRIMOL 352 | 140 | 140 | 140 | 140 | 140 | 140 |
| KRISTALEX F-120 | 110 | 110 | 110 | 110 | 110 | 110 |
| MILLICARB | | | 100 | | | 100 |

| | | | | | | | |
|---|---|---|---|---|---|---|---|
| Melt viscosity 180 °C, | Pa.s | 26 | 10.5 | 19 | 11.5 | 9.5 | 9 |
| Hardness Shore A, | Os | 49.5 | 45.5 | 56 | 47 | 39.5 | 43 |
| Tensile Strength, | MPa | 4.1 | 3.4 | 2.1 | 3.5 | 3.3 | 1.6 |

All compositions contained 3 parts by weight of KEMAMIDE E, 1 part by weight of TiO₂ and 1 part by weight of IRGANOX 1010.

## Claims

1. Conveyor belts, obtainable by application of a hot melt composition comprising
(a) a block copolymer, containing at least two terminal poly(vinylaromatic) blocks and at least one internal poly(conjugated diene) block, in which at least 80% of the original ethylenical unsaturation of the poly(conjugated diene) block has been selectively hydrogenated, said block copolymer optionally being modified by grafting polar moieties on it,
(b) a non-aromatic plasticizing oil, and
(c) a poly(vinylaromatic) block compatible resin,
on a fabric having from 5 to 25 threads per cm in both directions, while the threads in said fabric have a thickness in the range of from 20 µ to 300 µ.

2. Conveyor belt according to claim 1, characterized in that the coating density of the hot melt composition is in the range of from 0.5 to 3 g/cm² and preferably in the range of from 1 to 2 g/cm².

3. Conveyor belt according to claim 1, characterized in that as starting fabric a PET fabric is used, which has long filaments and/or which has been pretreated with resorcin-formaldehyde latex.

4. Conveyor belt according to claim 1, characterized in that the PET fabric has cut filaments, giving a rough surface to the fabric.

5. Conveyor belt according to claim 1, characterised in that 100 to 200 parts by weight of non-aromatic plasticising oil per 100 parts by weight of block copolymer and 50 to 150 parts by weight of poly(vinyl aromatic) block compatible resin per 100 parts by weight of block copolymer are used.

6. Conveyor belts according to claims 1-5, characterised in that component (a) in the hot melt composition is a selectively hydrogenated copolymer, containing substantially pure poly(styrene) blocks and hydrogenated substantially pure poly(butadiene) or poly(isoprene) blocks.

7. Conveyor belts according to claims 1-6, characterised in that the component (a) in the hot melt composition is a selectively hydrogenated block copolymer which has been modified by grafting to them a polar entity.

8. Conveyor belts according to claim 7 characterised in that the selectively hydrogenated poly(conjugated diene) blocks have been grafted with maleic anhydride or acrylic acid esters.

9. Conveyor belt according to claims 1-8, characterised in that as component (a) mixtures of unmodified and modified selectively hydrogenated block copolymers are applied, in which mixtures the weight ratios can vary in the range of from 95/5 to 40/60.

10. Conveyor belts according to claim 9, characterised in that unmodified and modified selectively hydrogenated block copolymer are applied in a weight ratio in the range of from 80/20 to 50/50.

11. Conveyor belts according to claims 1-10 characterised in that as component (b) in the hot melt composition is used a polyolefin of a molecular weight in the range of from 500 to 6000.

12. Process for manufacturing conveyor belts according to claims 1-11, comprising the application of a hot melt composition comprising
(a) a block copolymer, containing at least two terminal poly(vinylaromatic) blocks and at least one internal poly(conjugated diene) block, in which at least 80% of the original ethylenical unsaturation of the poly(conjugated diene) block has been selectively hydrogenated, said block copolymer optionally being modified by grafting polar moieties on it,
(b) a non-aromatic plasticizing oil, and
(c) a poly(vinylaromatic) block compatible resin, on one side of a fabric having from 5 to 25 threads per cm in both directions, while the threads in said fabric have a thickness in the range of from 20 µ to 300 µ, the hot melt composition layer having a thickness in the range of from 0.5 to 5 mm.

13. Process according to claim 12, characterised in that the application of the hot melt composition takes place by an extrusion-coating step, using a three roll take off to compress sheet and fabric.

14. Hot melt composition comprising
(a) a mixture of a modified block copolymer, containing at least two terminal poly(vinylaromatic) blocks and at least one internal poly(conjugated diene) block, in which at least 80% of the original ethylenical unsaturation of the poly(conjugated diene) block has been selectively hydrogenated which has been modified by grafting to them a polar entity,
an unmodified block copolymer, containing at least two terminal poly(vinylaromatic) blocks and at least one internal poly(conjugated diene) block, in which at least 80% of the original ethylenical unsaturation of the poly(conjugated diene) block has been selectively hydrogenated, in which mixture the weight ratio of unmodified to modified block copolymers can vary in the range of from 95/5 to 40/60
(b) a non-aromatic plasticising oil in an amount of from 100 to 200 parts by weight per 100 parts by weight of block copolymer and
(c) a poly(vinylaromatic) compatible resin in an amount of from 50 to 150 parts by weight per 100 parts by weight of block copolymer.

15. Hot melt composition according to claim 14, characterised in that the hydrogenated poly(conjugated diene) blocks of the modified block copolymer component has been grafted with maleic anhydride or acrylic acid esters.

16. Hot melt composition according to claims 14 and 15,
characterised in that the weight ratio of unmodified and modified block copolymers in component (a) is in the range of from 80/20 to 50/50.

17. Hot melt composition according to claims 14-16, characterised in that it contains in addition LLDPE.

## Patentansprüche

1. Förderbänder, erhältlich durch Auftragen einer Heißschmelzzusammensetzung, umfassend
(a) ein Blockcopolymer, das wenigstens 2 endständige Poly(vinylaromat)blöcke und wenigstens einen innenliegenden Poly(konjugiertes Dien)block enthält, worin wenigstens 80 % der ursprünglichen ethylenischen Unsättigung des Poly(konjugiertes Dien)blockes selektiv hydriert worden sind und welches Blockcopolymer gewünschtenfalls durch Aufpfropfen polarer Reste modifiziert worden ist,
(b) ein nichtaromatisches Weichmacheröl,
(c) ein mit dem poly(vinylaromatischen) Block verträgliches Harz;
auf ein Gewebe, das 5 bis 25 Fäden pro cm in beiden Richtungen aufweist, wobei die Fäden in diesem Gewebe eine Stärke im Bereich von 20 µ bis 300 µ aufweisen.

2. Förderband nach Anspruch 1, dadurch gekennzeichnet, daß die Beschichtungsdichte der Heißschmelzzusammensetzung im Bereich von 0,5 bis 3 g/cm² und vorzugsweise im Bereich von 1 bis 2 g/cm² liegt.

3. Förderband nach Anspruch 1, dadurch gekennzeichnet, daß als Grundgewebe ein PET-Gewebe verwendet wird, das lange Filamente aufweist und/oder das mit Resorcin-Formaldehydlatex vorbehandelt worden ist.

4. Förderband nach Anspruch 1, dadurch gekennzeichnet, daß das PET-Gewebe geschnittene Filamente aufweist, die dem Gewebe eine rauhe Oberfläche erteilen.

5. Förderband nach Anspruch 1, dadurch gekennzeichnet, daß 100 bis 200 Gew.-Teile nichtaromatisches Weichmacheröl je 100 Gew.-Teile Blockcopolymer und 50 bis 150 Gew.-Teile mit dem Poly(vinylaromat)block verträgliches Harz je 100 Gew.-Teile Blockcopolymer verwendet werden.

6. Förderbänder nach den Ansprüchen 1 bis 5, dadurch gekennzeichnet, daß die Komponente (a) in der Heißschmelzzusammensetzung ein selektiv hydriertes Copolymer ist, das im wesentlichen reine Poly(styrol)blöcke und hydrierte, im wesentlichen reine Poly(butadien)- oder Poly(isopren)blöcke enthält.

7. Förderbänder nach den Ansprüchen 1 bis 6, dadurch gekennzeichnet, daß die Komponente (a) in der Heißschmelzzusammensetzung ein selektiv hydriertes Blockcopolymer ist, das durch Aufpfropfen einer polaren Verbindung modifiziert worden ist.

8. Förderbänder nach Anspruch 7, dadurch gekennzeichnet, daß die selektiv hydrierten Poly(konjugiertes Dien)blöcke mit Maleinsäureanhydrid oder Acrylsäureestern gepfropft worden sind.

9. Förderband nach den Ansprüchen 1 bis 8, dadurch gekennzeichnet, daß als Komponente (a) Gemische aus unmodifizierten und modifizierten, selektiv hydrierten Blockcopolymeren angewendet werden, in welchen Gemischen die Gewichtsverhältnisse im Bereich von 95/5 bis 40/60 variieren können.

10. Förderbänder nach Anspruch 9, dadurch gekennzeichnet, daß das unmodifizierte und das modifizierte selektiv hydrierte Blockcopolymer in einem Gewichtsverhältnis im Bereich von 80/20 bis 50/50 angewendet werden.

11. Förderbänder nach den Ansprüchen 1 bis 10, dadurch gekennzeichnet, daß als Komponente (b) in der Heißschmelzzusammensetzung ein Polyolefin mit einem Molekulargewicht im Bereich von 500 bis 6000 verwendet wird.

12. Verfahren zur Herstellung von Förderbändern nach den Ansprüchen 1 bis 11, umfassend das Aufbringen einer Heißschmelzzusammensetzung, die
(a) ein Blockcopolymer, das wenigstens 2 endständige Poly(vinylaromat)blöcke und wenigstens einen innenliegenden Poly(konjugiertes Dien)block enthält, worin wenigstens 80 % der ursprünglichen ethylenischen Unsättigung des Poly(konjugiertes Dien)blockes selektiv hydriert worden sind und welches Blockcopolymer gewünschtenfalls durch Aufpfropfen polarer Reste modifiziert worden ist,
(b) ein nichtaromatisches Weichmacheröl,
(c) ein mit dem poly(vinylaromatischen) Block verträgliches Harz;
umfaßt, auf eine Seite des Gewebes, das 5 bis 25 Fäden pro cm in beiden Richtungen aufweist, wobei die Fäden in diesem Gewebe eine Stärke im Bereich von 20 µ bis 300 µ umfassen, wobei die Schicht aus der Heißschmelzzusammensetzung eine Stärke im Bereich von 0,5 bis 5 mm aufweist.

13. Verfahren nach Anspruch 12, dadurch gekennzeichnet, daß das Aufbringen der Heißschmelzzusammensetzung durch einen Extrusions-Beschichtungsschritt erfolgt, unter Anwendung einer Dreiwalzenabzugsvorrichtung zum Komprimieren von Bahn und Gewebe.

14. Heißschmelzzusammensetzung, umfassend
a) ein Gemisch aus einem modifizierten Blockcopolymer, das wenigstens 2 endständige Poly(vinylaromat)blöcke und wenigstens einen innenliegenden Poly(konjugiertes Dien)block enthält, worin wenigstens 80 % der ursprünglichen ethylenischen Unsättigung des Poly(konjugiertes Dien)blocks selektiv hydriert worden sind, das durch Aufpropfen einer polaren Verbindung modifiziert worden ist, und einem unmodifizierten Blockcopolymer, das wenigstens 2 endständige Poly(vinylaromat)blöcke und wenigstens einen innenliegenden Poly(konjugiertes Dien)block enthält, worin wenigstens 80 % der ursprünglichen ethylenischen Unsättigung des Poly(konjugiertes Dien)blocks selektiv hydriert worden sind, in welchem Gemisch das Gewichtsverhältnis von unmodifiziertem zu modifiziertem Blockcopolymer im Bereich von 95/5 bis 40/60 variieren kann,
b) ein nichtaromatisches Weichmacheröl in einer Menge von 100 bis 200 Gew.-Teilen je 100 Gew.-Teile Blockcopolymer und
c) ein mit dem Poly(vinylaromat) verträgliches Harz in einer Menge von 50 bis 150 Gew.-Teilen je 100 Gew.-Teile Blockcopolymer.

15. Heißschmelzzusammensetzung nach Anspruch 14, dadurch gekennzeichnet, daß die hydrierten Poly(konjugiertes Dien)blöcke der modifizierten Blockcopolymerkomponente mit Maleinsäureanhydrid oder Acrylsäureestern gepfropft worden sind.

16. Heißschmelzzusammensetzung nach den Ansprüchen 14 und 15, dadurch gekennzeichnet, daß das Gewichtsverhältnis von unmodifizierten und modifizierten Blockcopolymeren in der Komponente (a) im Bereich von 80/20 bis 50/50 liegt.

17. Heißschmelzzusammensetzung nach den Ansprüchen 14 bis 16, dadurch gekennzeichnet, daß sie zusätzlich LLDPE enthält.

## Revendications

1. Courroie transporteuse visée par l'application d'une composition thermofusible comprenant :
(a) un copolymère séquencé contenant au moins deux séquences poly(vinyle aromatiques) terminales et au moins une séquence de poly(diène conjugué) interne, où au moins 80% de la saturation éthylénique d'origine de la séquence de poly(diène conjugué) ont été sélectivement hydrogénés, ledit copolymère séquencé ayant été éventuellement modifié en greffant des groupements polaires sur lui,
(b) une huile plastifiante non aromatique,
(c) une résine compatible avec une séquence poly(vinyle aromatique),
sur un tissu comportant 5 à 25 fils par cm dans les deux directions, cependant que les fils du tissu en question possèdent une épaisseur qui varie de 20 µ à 300 µ.

2. Courroie transporteuse suivant la revendication 1, caractérisée en ce que la masse volumique du revêtement de la composition thermofusible varie dans la plage de 0,5 à 3 g/cm² et, de préférence, dans la plage de 1 à 2 g/cm².

3. Courroie transporteuse suivant la revendication 1, caractérisée en ce que l'on utilise, à titre de tissu de départ, un tissu de PET qui possède de longs filaments et/ou qui a été prétraité par un latex de résorcine-formaldéhyde.

4. Courroie transporteuse suivant la revendication 1, caractérisée en ce que le tissu de PET possède des filaments coupés, conférant une surface rugueuse au tissu.

5. Courroie transporteuse suivant la revendication 1, caractérisée en ce que l'on utilise 100 à 200 parties en poids d'huile plastifiante non aromatique par 100 parties en poids de copolymère séquencé et 50 à 150 parties en poids de résine compatible avec la séquence poly(vinyle aromatique) par 100 parties en poids de copolymère séquencé.

6. Courroie transporteuse suivant les revendications 1 à 5, caractérisée en ce que le composant (a) dans la composition thermofusible est un copolymère sélectivement hydrogéné, contenant des séquences de poly(styrène) sensiblement pur et des séquences de poly(butadiène) ou de poly(isoprène) sensiblement pur.

7. Courroie transporteuse suivant l'une quelconque des revendications 1 à 6, caractérisée en ce que le composant (a) dans la composition thermofusible est un copolymère séquencé sélectivement hydrogéné qui a été modifié en greffant une entité polaire sur lui.

8. Courroie transporteuse suivant la revendication 7, caractérisée en ce que les séquences de poly(diènes conjugués) sélectivement hydrogénés ont été greffées d'anhydride maléique ou d'esters de l'acide acrylique.

9. Courroie transporteuse suivant l'une quelconque des revendications 1 à 8, caractérisée en ce que, à titre de composant (a), on applique des mélanges de copolymères séquencés sélectivement hydrogénés, non modifiés et modifiés, mélanges dans lesquels les rapports pondéraux peuvent varier de 95/5 à 40/60.

10. Courroie transporteuse suivant la revendication 9, caractérisée en ce que l'on applique les copolymères séquencés sélectivement hydrogénés, non modifiés et modifiés, en un rapport pondéral qui varie de 80/20 à 50/50.

11. Courroie transporteuse suivant l'une quelconque des revendications 1 à 10, caractérisée en ce que, à titre de composant (b), on utilise dans la composition thermofusible une polyoléfine d'un poids moléculaire qui varie dans la plage de 500 à 6000.

12. Procédé de fabrication de courroies transporteuses suivant l'une quelconque des revendications 1 à 11, qui comprend l'application d'une composition thermofusible comprenant :
(a) un copolymère séquencé contenant au moins deux séquences poly(vinyle aromatiques) terminales et au moins une séquence de poly(diène conjugué) interne, où au moins 80% de l'insaturation éthylénique d'origine de la séquence de poly(diène conjugué) ont été sélectivement hydrogénés, ledit copolymère séquencé ayant été éventuellement modifié en greffant des groupements polaires sur lui,
(b) une huile plastifiante non aromatique, et
(c) une résine compatible avec la séquence poly(vinyle aromatique), d'un côté du tissu, possédant de 5 à 25 fils par cm dans les deux directions, cependant que fils du tissu en question possèdent une épaisseur qui varie de 20µ à 300µ, la couche de composition thermofusible ayant une épaisseur qui fluctue 0,5 à 5 mm.

13. Procédé suivant la revendication 12, caractérisé en ce que l'application de la composition thermofusible s'entreprend par une étape de revêtement par extrusion en ayant recours à un prélèvement à trois rouleaux pour comprimer feuille et tissu.

14. Composition thermofusible, qui comprend :
(a) un mélange d'un copolymère séquencé modifié, contenant au moins deux séquences poly(vinyle aromatiques) terminales et au moins une séquence de poly(diène conjugué) interne, où au moins 80% de l'insaturation éthylénique d'origine de la séquence de poly(diène conjugué) ont été sélectivement hydrogénés, qui a été modifiée en greffant sur elle une entité polaire,
et
un copolymère séquencé non modifié, contenant au moins deux séquences poly(vinyle aromatiques) terminales et au moins une séquence de poly(diène conjugué) interne où au moins 80% de l'insaturation éthylénique d'origine de la séquence de poly(diène conjugué) ont été sélectivement hydrogénés, dans lequel mélange, le rapport pondéral du copolymère séquencé non modifié au copolymère séquencé modifié peut varier dans la plage de 95/5 à 40/60,
(b) une huile plastifiante non aromatique en une proportion de 100 à 200 parties en poids par 100 parties en poids de copolymère séquencé, et
(c) une résine poly(vinyle aromatique) compatible en une proportion de 50 à 150 parties en poids par 100 parties en poids de copolymère séquencé.

15. Composition thermofusible suivant la revendication 14, caractérisée en ce que les séquences de poly(diènes conjugués) hydrogénés du composant du type copolymère séquencé modifié ont été greffées d'anhydride maléique ou d'esters d'acide acrylique.

16. Composition thermofusible suivant l'une quelconque des revendications 14 et 15, caractérisée en ce que le rapport pondéral des copolymères séquencés non modifiés et modifiés dans le composant (a) varie de 80/20 à 50/50.

17. Composition thermofusible suivant l'une quelconque des revendications 14 à 16, caractérisée en ce qu'elle contient, en outre, du LLDPE.
